# EUROPÄISCHE PATENTSCHRIFT

(11) **EP 3 586 939 B1**
(45) Veröffentlichungstag und Bekanntmachung des Hinweises auf die Patenterteilung: **07.07.2021**
(21) Anmeldenummer: 19191888.7
(22) Anmeldetag: 08.07.2013
(51) Int. Cl.: B01D 46/00, B01D 46/10, B01D 46/52, B60H 3/06

(54) **LUFTFILTER FÜR DIE INNENRAUMLUFT VON KABINEN VON FAHRZEUGEN, LAND-, BAU- UND ARBEITSMASCHINEN**
AIR FILTER FOR THE INDOOR AIR OF CABINS OF VEHICLES, AGRICULTURAL, CONSTRUCTION AND WORKING MACHINES
FILTRE À AIR POUR L'AIR D'HABITACLE DES CABINES DE VÉHICULES, DE MACHINES AGRICOLES, DE CONSTRUCTION ET D'EINGINS DE TRAVAUX PUBLICS

(30) Priorität: 11.07.2012 DE 102012013671
(43) Veröffentlichungstag der Anmeldung: 01.01.2020
(62) Teilanmeldung aus: 13175472.3
(73) Patentinhaber: MANN+HUMMEL GmbH, 71636 Ludwigsburg (DE)
(72) Erfinder: STINZENDÖRFER, Joachim, 67346 Speyer (DE); GOHLE, Angelika, 67365 Schwegenheim (DE); HANDSTEIN, Michael, 67549 Worms (DE)
(74) Vertreter: Mann + Hummel Intellectual Property

(56) Entgegenhaltungen:
- DE-A1- 3 524 431
- DE-A1- 19 700 340
- DE-U1-202005 015 911
- DE-U1-202005 015 911
- US-A- 4 784 048
- US-A- 5 423 903
- US-B1- 6 228 152

## Beschreibung

### Technisches Gebiet

Die Erfindung betrifft einen Innenraumluftfilter für die einer Fahrerkabine zugeführte Luft in Fahrzeugen, Landmaschinen, Baumaschinen und Arbeitsmaschinen.

### Stand der Technik

Aus US 5,423,903 A ist ein Filter bekannt, bei welchem Aktivkohlepartikel in Zwischenräumen zwischen einem akkordeonartig gefalteten Filterelement und einer Decklage gefüllt ist. Aus DE 35 24 431 A1 ist ein Filtereinsatz umfassend mit Aktivkohlepartikeln gefülltem PU-Schaum bekannt. Aus der WO 00/33940 A1 ist ein Luftfilter bekannt, welcher eine äußere Lage von Aktivkohle mit einer Lage eines HEPA-Filters kombiniert.

Die Filterwirkung dieses Filters kann jedoch für Anwendungen, bei welchen zum Beispiel hohe Pflanzenschutzmittelkonzentrationen oder (Flüssig)-Düngemittel-Konzentrationen in der Umgebungsluft auftreten, insbesondere beim Umgang mit Sprühgeräten für diese Stoffe, nicht ausreichend sein. Dies kann insbesondere beim Ausbringen von flüssigen Pestiziden und/oder Fungiziden mit land- oder forstwirtschaftlichen Traktoren und selbstfahrenden Pflanzenschutzgeräten für Fahrer oder Bedienpersonal nachteilig sein.

Als Aerosol wird für die folgenden Ausführungen ein Gemisch aus flüssigen Schwebeteilchen und Luft verstanden.

Es ist daher Aufgabe dieser Erfindung, einen Innenraumluftfilter bereitzustellen, der eine bessere Filterwirkung in Bezug auf die im Betrieb von Landmaschinen auftretenden Stäube, Aerosole und Dämpfe, insbesondere von Pestiziden und Fungiziden, aufweist.

### Offenbarung der Erfindung

Diese Aufgabe wird gelöst durch ein Innenraumluftfilterelement, umfassend eine Adsorptionsfilterlage, umfassend Aktivkohle, insbesondere zur Abscheidung von Gasen, eine Feinfilterlage, insbesondere zur Abscheidung von Aerosolen, und eine umlaufende Dichtung zur Trennung der Rohseite von der Reinseite beim Einbau in ein Filtergehäuse.

Erfindungsgemäß weist die Adsorptionsfilterlage einen Schichtaufbau aus mehreren fixierten Schüttungen auf, die fixierten Schüttungen umfassend eine Trägerschicht, auf welcher eine Schüttlage von Aktivkohlepartikeln fixiert.

Das erfindungsgemäße Filterelement kann insbesondere für die Fahrerkabine von Land und Arbeitsmaschinen, insbesondere mit Spritz- oder Sprühvorrichtungen für Pflanzenschutz- oder Düngemittel verwendet werden. Durch die Kombination von Adsorptionsfilterlage und Feinfilterlage können zuverlässig auch in den genannten, stark belasteten Umgebungen stark verbesserte Luftqualitäten im Innenraum der Fahrerkabine erzielt werden. In der Adsorptionsfilterlage werden insbesondere gesundheitsschädliche und/ oder unangenehm riechende Gase gebunden, in der stromauf oder stromab der Adsorptionsfilterlage angeordneten Feinfilterlage werden feine Stäube, Dämpfe und Aerosole aus der Atemluft entfernt. Die Feinfilterlage ist bevorzugt stromauf der Adsorptionsfilterlage angeordnet.

In einer Ausführungsform ist zusätzlich eine anströmseitige Vorfilterlage, insbesondere zur Abscheidung von Stäuben vorgesehen. Diese ist der Adsorptionsfilterlage und der Feinfilterlage vorgeschaltet und auf der Anströmseite des Innenraumfilterelements angeordnet. Dadurch kann auch in stark staubbelasteten Umgebungen eine zuverlässige Funktion der Adsorptionsfilterlage und der Feinfilterlage gesichert und die Staubbeladung der Ansaugluft reduziert werden.

Die verwendete Aktivkohle kann beispielsweise aus Holz oder Steinkohle gewonnen, polymer basiert, teerbasiert, oder Kokosnussschalen-basiert sein. In einer bevorzugten Ausführungsform werden als Grundstoff für die Aktivkohle lonenaustauscherkügelchen verwendet, die auf Polymerbasis, beispielsweise aus Kunstharzen, insbesondere aus mit Divinylbenzen vernetztem Polystyren hergestellt sind.

In einer Ausführungsform wird als Aktivkohle eine hydrophobe Aktivkohle verwendet. Als hydrophobe Aktivkohlen werden insbesondere solche verstanden, die eine vergleichsweise geringe Wasseraufnahmekapazität aufweisen. Bevorzugt wird eine Aktivkohle verwendet, welche bei einer relativen Luftfeuchte von 50% eine Wasseraufnahme von <10 Massenprozent, insbesondere bezogen auf den Adsorptionsast der Isotherme aufweist. Besonders bevorzugt beträgt diese Wasseraufnahme <5 Massenprozent.

In einer Ausführungsform weist die Aktivkohle eine BET-Oberfläche von größer 400 m²/g auf, vorteilhaft größer 600 m²/g, bevorzugt größer 800 m²/g, besonders bevorzugt größer 1000 m²/g (bevorzugt gemessen nach DIN ISO 9277:2003-05). Dadurch kann auf kleinem Bauraum eine ausreichende Adsorption sichergestellt werden.

In einer Ausführungsform wird Aktivkohle in schütt- oder rieselfähiger Form, beispielsweise in Form von körner- oder kugelartiger oder anderweitig geformter Partikel verwendet. Die Aktivkohlepartikel weisen bevorzugt Aktivkohlepartikelgrößen (mittlere Durchmesser) zwischen 0,1 und 1 mm, bevorzugt 0,2 bis 0,7 mm auf und können beispielsweise in der Form von Granulat-Aktivkohle oder Kugel-Aktivkohle vorliegen.

In einer Ausführungsform kann als Vorfilterlage ein ungefaltetes oder zickzackförmig gefaltetes Filtermedium verwendet werden. Dies kann beispielsweise aus Zellulose, Kunststoffschaum oder Vlies bestehen oder eine ein- oder mehrlagige Kombination aus Lagen derartiger Filtermedien umfassen.

Eine Kunststoffschaum-Filtermedienlage für die Vorfilterlage kann beispielsweise aus einem retikulierten Schaum, insbesondere Polyurethanschaum, beispielsweise auf Polyether- oder Polyesterbasis bestehen oder eine oder mehrere Lagen dieses Schaums umfassen. Raumgewichte derartiger Schäume können im Bereich von 20 - 70 kg pro m³ betragen.

Als Zellulose-Filtermedium für die Vorfilterlage kann beispielsweise ein Zellulose-Filtermedium mit Epoxidimprägnierung zum Einsatz kommen. Bevorzugt weist das Zellulose-Filtermedium ein Flächengewicht von 80 -140 g/m², bevorzugt 100-120 g/m² auf. In einer bevorzugten Ausführungsform weist das Medium eine maximale Porengröße im Bereich von 30 - 40 µm und/oder eine Luftdurchlässigkeit von ca. 100 - 400 l/m²s, bevorzugt zwischen 200 und 300 l/m²s auf, jeweils gemessen bei einer Druckdifferenz von 200 Pa (gemessen hier und im Folgenden bevorzugt nach DIN EN ISO 9237). Auf diese Weise können die nachfolgenden Lagen vor Staubablagerung geschützt und damit deren Funktion gesichert werden. In einer Ausführung beträgt der Imprägniergehalt, d.h. der Gewichtsanteil des Imprägniermittels am Flächengewicht des Filtermediums zwischen 15 und 30%.

Als Vlies-Filtermedium für die Vorfilterlage kann bevorzugt eine Kombination einer Spinnvlieslage und einer Meltblown-Lage (Vlies aus schmelzgeblasenen Kunststofffasern) verwendet werden. Beide Lagen können jeweils aus Polyamid (PA), Polyester (PES) oder Polypropylen (PP) hergestellt sein. Das Vlies-Filtermedium weist bevorzugt ein Flächengewicht zwischen 60 und 140 g/m², bevorzugt zwischen 80 und 120 g/m² und/oder eine Dicke im Bereich von 0,5 - 1mm, besonders bevorzugt von 0,5-0,8 mm auf. Weiter bevorzugt liegt die Luftdurchlässigkeit im Bereich von 1000 - 2000 l/m²s, besonders bevorzugt zwischen 1200 und 1800 l/m²s bei einer Druckdifferenz von 200 Pa.

In einer Ausführungsform weist die Vorfilterlage insbesondere nach ISO 5011 einen Abscheidegrad von 99% für Prüfstaub PTI fein insbesondere nach ISO 14269-4 auf.

Die Vorfilterlage weist in einer bevorzugten Ausführungsform eine Flächenmasse von 75 - 125 g/m² auf. Bevorzugt weist das Filtermedium der Vorfilterlage eine Luftdurchlässigkeit von 100 - 200 l/m²s bei einer Druckdifferenz von 200 Pa auf.

Durch die Verwendung der Vorfilterlage kann erreicht werden, dass die Adsorptionslage und die Feinfilterlage vor zu großer Staubbeladung geschützt werden. Dadurch wird deren Funktion (Gasabscheidung der Adsorptionslage und Aerosolabscheidung der Feinfilterlage) auch bei sehr staubbeladener Ansaugluft in möglichst geringem Maße beeinträchtigt.

Erfindungsgemäß ist als Adsorptionsfilterlage eine Lage einer fixierten Schüttung mit Aktivkohle verwendet. Diese ist in einem mehrlagigen Aufbau realisiert. Als fixierte Schüttung wird eine Anordnung bezeichnet, in welcher eine Trägerschicht vorgesehen ist und auf dieser eine Schüttlage von Aktivkohlepartikeln fixiert ist. Als Trägerschicht kann beispielsweise ein Kunststoffstreckgitter oder eine Lage eines flächigen Materials, zum Beispiel eines Partikelfiltermediums verwendet werden. In einer bevorzugten Ausführungsform wird als Trägerschicht ein Vlies aus spinngebundenen oder schmelzgeblasenen Polyesterfasern, beispielsweise PET-Fasern (Polyethylenterephthalat) oder PBT-Fasern (Polybutylenterephtalat) verwendet. Dies kann ein Flächengewicht von 25-120 g/m², bevorzugt 50-100 g/m², besonders bevorzugt 65-85 g/m² und eine Luftdurchlässigkeit >3000 l/m²s, bevorzugt >5000 l/m²s bei einer Druckdifferenz von 200 Pa aufweisen. Gemessen wird die Luftdurchlässigkeit insbesondere nach ISO 9347. Die Schüttlage aus Aktivkohlepartikeln wird auf die Trägerschicht aufgebracht und bevorzugt mittels eines feinen Klebstoffauftrags auf der Trägerschicht fixiert. Dies erfolgt beispielsweise in Form einer Vielzahl von auf der Trägerschicht aufgebrachter Klebstoffpunkte oder mittels eines Netzes aus Klebstofffäden, die zwischen Trägerschicht und Schüttlage und/oder zwischen die Schüttlage während der Schüttung und/oder auf die Schüttlage aufgebracht ist. Die Schüttlage umfasst bevorzugt eine Auflage von 100-1200 g/m² Aktivkohlepartikel auf der Trägerschicht. Bevorzugt kommen zwischen 800 und 1000 g/m² zum Einsatz. Die Lage einer fixierten Schüttung mit Trägerlage und Schüttlage weist bevorzugt eine Luftdurchlässigkeit im Bereich von 800 - 1200 l/m²s, insbesondere zwischen 900 und 1100 l/m²s und ein Flächengewicht im Bereich von 850 bis 1250 g/m², insbesondere zwischen 950 und 1150 g/m² bei einer Lagendicke insbesondere im Bereich von 2 bis 6 mm auf.

Auf diese Weise wird eine stabile, gut zu verarbeitende und leistungsfähige Lage einer fixierten Schüttung bereitgestellt, die maschinell zu mehrlagigen Halbzeugen zusammengefasst werden kann.

Erfindungsgemäß weist die Adsorptionsfilterlage einen Schichtaufbau aus mehreren fixierten Schüttungen auf. So kann beispielsweise eine erste Lage einer fixierten Schüttung mit der Seite, auf der die Aktivkohle angeordnet ist (Aktivkohleseite), auf die Aktivkohleseite einer zweiten Lage fixierter Schüttung gelegt und mit dieser beispielsweise durch Verkleben verbunden werden. Dadurch wird ein Halbzeug mit zwei Träger- oder Deckschichten und dazwischen angeordneter Schüttlage gebildet. Derartige Halbzeuge können wiederum zur Erhöhung der Filtrationsleistung mehrfach übereinander angeordnet werden, beispielsweise zwischen zwei und 10 Halbzeuge, bevorzugt zwischen 3 und 7 Halbzeuge. Alternativ oder in Kombination sind auch Anordnungen denkbar, bei welchen jeweils die Trägerlage einer Lage einer fixierten Schüttung auf die Aktivkohlelage einer anderen fixierten Schüttung aufgelegt ist. Diese Anordnung kann dann durch eine gewendete Lage mit fixierter Schüttung oder eine Deckschicht abgeschlossen werden. Erfindungsgemäß sind zwischen 4 und 20 Lagen einer fixierten Schüttung aufeinander angeordnet.

In einer Ausführungsform kann die gesamte Adsorptionsfilterlage einen zickzackförmig gefalteten Schichtaufbau bilden oder einzelne, übereinanderliegende, separat gefaltete oder ungefaltete Schichten aus Halbzeug oder Lagen von fixierter Schüttung umfassen.

In einer Ausführungsform weist die Adsorptionsfilterlage zwei Bereiche mit unterschiedlicher Aktivkohledichte auf. Dabei ist bevorzugt ein Bereich mit höherer Aktivkohledichte auf der Abströmseite und ein Bereich mit geringerer Aktivkohledichte auf der Anströmseite angeordnet. Dies kann beispielsweise dadurch erreicht werden, dass wie oben in verschiedenen Varianten beschrieben ein Schichtaufbau von Lagen mit fixierten Schüttungen von Aktivkohlepartikeln eingesetzt werden, bei welchem eine oder mehrere abströmseitige Lagen oder Schichten, die insbesondere den Schichtaufbau zur Abströmseite hin abschließen, eine höhere Aktivkohledichte aufweisen. Dies kann beispielsweise dadurch erreicht werden, dass bei gleichen Materialien für Trägerschichten, Schüttlagen und Decklagen die abströmseitigen Lagen insbesondere vor, während oder nach dem Erhärten des Klebstoffes derart kalandriert werden, dass die Schichtdicke reduziert und damit die Aktivkohledichte erhöht wird. Es kann jedoch auch für die Lage(n) mit höherer Aktivkohledichte ein Aktivkohlegranulat verwendet werden, welches eine höhere Schüttdichte aufweist als das für die Lagen mit geringerer Dichte verwendete. Dies kann entweder durch Aktivkohlen mit unterschiedlicher spezifischer Dichte oder durch unterschiedliche Geometrien der Partikel realisiert werden. Dadurch wird insbesondere eine Sperrlage dargestellt, welche zuverlässig die Abscheidung von Restkonzentrationen von schädlichen Gasen ermöglichen kann. Dadurch kann eine zusätzliche Sicherheit für den Anwender bereitgestellt werden.

In einer bevorzugten Ausführungsform weist die Adsorptionsfilterlage einen abströmseitigen Bereich umfassend eine oder mehrere insbesondere kalandrierte Lagen von fixierter Schüttung auf. Diese Lage(n) weisen bevorzugt eine Auflage von Aktivkohle von 100-1200 g/m² Aktivkohlepartikel auf der Trägerschicht auf. Bevorzugt kommen zwischen 800 und 1000 g/m² zum Einsatz. Die Lage einer fixierten Schüttung mit Trägerlage und Schüttlage weist hierfür bevorzugt eine Luftdurchlässigkeit im Bereich von 800 - 1200 l/m²s, insbesondere zwischen 900 und 1100 l/m²s und ein Flächengewicht im Bereich von 850 bis 1250 g/m², insbesondere zwischen 950 und 1150 g/m² bei einer Lagendicke insbesondere im Bereich von 1 bis 3 mm auf. Besonders bevorzugt weisen diese Lagen oder diese Lage im abströmseitigen Bereich mit höherer Aktivkohledichte im Wesentlichen die gleiche Auflage von Aktivkohlepartikel in Bezug auf das Flächengewicht und/oder die Art der Aktivkohlepartikel auf wie die vorhergehenden, anströmseitigen Lagen mit geringerer Aktivkohledichte. Weiter bevorzugt weist diese Lage oder diese Lagen eine deutlich geringere Lagendicke auf als die vorhergehenden, anströmseitigen Lagen mit geringerer Aktivkohledichte. Die Lagendicke kann beispielsweise kleiner 2/3 der Dicke der vorhergehenden, anströmseitigen Lagen mit geringerer Aktivkohledichte betragen, bevorzugt zwischen 40% und 60% der Dicke der vorhergehenden, anströmseitigen Lagen. Dazu werden beispielsweise die Lage oder die Lagen mit höherer Aktivkohledichte durch einen Kalandrierschritt oder ein ähnliches Verfahren derart verdichtet, dass gegenüber der unbearbeiteten Schicht eine derartige Dickenreduktion erreicht wird. Auf diese Weise können die verschiedenen Bereiche mit unterschiedlicher Aktivkohledichte aus den gleichen Grundmaterialien hergestellt werden, wobei zur Erzeugung der Lagen mit höherer Aktivkohledichte nur ein zusätzlicher Kalandrierschritt erforderlich ist.

In einer bevorzugten Ausführungsform wird für die Lage oder die Lagen mit höherer Aktivkohledichte eine Schüttung aus Aktivkohlepartikeln verwendet, die im Vergleich zu den vorhergehenden, anströmseitigen Lagen mit geringerer Aktivkohledichte eine höhere Schüttdichte aufweist. Bevorzugt ist dabei die Schüttdichte im Vergleich zu den anströmseitigen Lagen mit geringerer Aktivkohledichte um 50%, besonders bevorzugt um 100% höher.

In einer besonders bevorzugten Ausführungsform wird für die Lage oder die Lagen mit höherer Aktivkohledichte eine Schüttung aus Aktivkohlepartikeln verwendet, die im Vergleich zu den vorhergehenden, anströmseitigen Lagen mit geringerer Aktivkohledichte einen geringeren mittleren Partikeldurchmesser, insbesondere einen um mindestens 50% geringeren mittleren Partikeldurchmesser, bevorzugt einen mindestens 65% geringeren mittleren Partikeldurchmesser aufweist.

In einer Ausführungsform weisen die anströmseitigen Lagen mit geringerer Aktivkohledichte Aktivkohlepartikel mit einem Partikeldurchmesser im Bereich von 0,7 bis 1,2 mm auf.

In einer Ausführungsform weisen die Lage oder die Lagen mit höherer Aktivkohledichte eine Schüttung aus Aktivkohlepartikeln mit Partikeldurchmesser im Bereich von 0,3 bis 0,7 mm auf.

Mit den beschriebenen Ausführungsformen der Adsorptionsfilterstufe wird insbesondere eine gleichmäßige Verteilung der Aktivkohle erreicht, die auch während des Betriebs beispielsweise unter Vibrationsbelastung gewährleistet ist. Auf diese Weise kann zur Bereitstellung eines zuverlässigen Filterelements beigetragen werden.

Mit einem erfindungsgemäßen Filtermedium für eine Adsorptionsfilterlage kann insbesondere ein Innenraumfilterelement mit einer Adsorptionsfilterlage bereitgestellt werden, die insbesondere gut verarbeitbar ist. Insbesondere kann ein Innenraumfilterelement bereitgestellt werden, das abströmseitig eine Prüfgas-Konzentration unter 10 µg/g nach der Zyklohexan-Methode entsprechend EN 12941:1998 bei einer Prüfdauer von 70 min gemessen nach EN 15695-2:2009 erreicht.

In einer Ausführungsform wird als Feinfilterlage ein ungefaltetes oder zickzackförmig gefaltetes Filtermedium mit Glasfasern in einer Glasfaserlage verwendet. Hierbei kann beispielsweise ein Glasfaservlies oder Glasfaserpapier verwendet werden. Dieses weist bevorzugt eine einseitig oder beidseitig kaschierte Deckschicht aus einem Spinnvlies auf. Dadurch wird insbesondere ein mechanischer Schutz des oft sehr empfindlichen Glasfasermediums erreicht. Dies ist insbesondere von Vorteil, wenn die Glasfaserlage gefaltet wird, da hierdurch insbesondere das Medium vor Beschädigungen beim Falten geschützt werden kann, welche zu lokalen Undichtigkeiten oder zu Rissen führen könnten. Ferner können derartige Deckschichten zur Verbesserung der mechanischen Festigkeit der Feinfilterlage dienen.

In einer Ausführungsform der Feinfilterlage weisen die Glasfasern einen Faserdurchmesser im Bereich von 800 nm bis 5 µm auf. Bevorzugt weisen 90 % der Fasern einen Faserdurchmesser innerhalb dieses Bereichs auf. Bevorzugt liegen Fasern mit Faserdurchmessern im Wesentlichen im ganzen Faserdurchmesserbereich vor. Bevorzugt liegt der mittlere Faserdurchmesser innerhalb des genannten Bereiches. Die Faserdurchmesser können beispielsweise nach den in DE 10 2009 043 273 A1 oder US 2011/0235867 A1 beschriebenen Verfahren gemessen sein. Bevorzugt weist das Filtermedium der Feinfilterlage eine Flächenmasse zwischen 60 und 100 g/m² auf, besonders bevorzugt zwischen 75 und 90 g/m². Die Glasfaserlage weist bevorzugt eine Dicke von 0,2 - 1 mm, besonders bevorzugt von 0,3 - 0,6 mm auf. Besonders bevorzugt wird eine Glasfaserlage verwendet, welche bei einer Anströmgeschwindigkeit von 7,5 cm/s einen Widerstand im Bereich von 300 - 600 Pa, bevorzugt zwischen 400 und 500 Pa erzeugt. Die Luftdurchlässigkeit (Permeabilität) liegt bevorzugt im Bereich von 25 bis 45 l/m²s bei einem Druckverlust von 200 Pa. Der Druckverlust liegt bei einer Strömungsgeschwindigkeit von 5,3 cm/s bevorzugt im Bereich von 200-700 Pa, besonders bevorzugt zwischen 450 und 600 Pa oder alternativ zwischen 270-480 Pa. Die Porengröße kann bevorzugt im Bereich zwischen 5 und 12 µm, besonders bevorzugt zwischen 8 und 10 µm liegen.
In einer Ausführungsform sind die Spinnvliese der Deckschicht(en) insbesondere aus einem Polyester oder Polypropylen oder Polyamid als Werkstoff gebildet.
In einer Ausführungsform weisen die Spinnvliese der Deckschicht(en) Flächenmassen im Bereich von 10 und 250 g/m², bevorzugt 20 bis 60 g/m² und besonders bevorzugt 30-34 g/m²auf. Bevorzugte Schichtdicken für die Deckschichten liegen im Bereich von 0,1 bis 0,3 mm.

In einer Ausführungsform wird das Spinnvlies der Deckschichten aus Endlosfasern gebildet, die mittels temperierter Luft und/oder Galetten verstreckt und auf ein Transportband wirr abgelegt werden. Nachfolgen kann optional ein Kalanderprozess erfolgen zum Erzeugen eines Faserverbunds und/oder Beeinflussung der Vliesoberflächen.

Anstatt von Glasfasern können für die Feinfilterlage auch Kunststofffasern verwendet werden. In einem Ausführungsbeispiel wird ein solches synthetisches HEPA-Medium an Stelle der beschriebenen Glasfasermedien verwendet. Als Werkstoff kann dabei beispielsweise Polyester oder Polypropylen oder Polyamid verwendet werden, die Faserlagen sind dabei bevorzugt in Vliesform ausgebildet und beispielsweise im Elektrospinningverfahren, im Schmelzblasverfahren oder auf sonstige Weise hergestellt. Bevorzugt wird dabei ein Elektretmedium verwendet. Aufgrund der Stoffeigenschaften synthetischer Filtermedien kann vorteilhaft auf Deck und Schutzlagen verzichtet werden. Bevorzugt wird eine Lage aus schmelzgeblasenem Vlies aus Polyester mit einer Flächenmasse von beispielsweise 80 - 160 g/m², bevorzugt zwischen 80 und 120 g/m² und einer Dicke von beispielsweise ca. 0,4 bis 1 mm verwendet. Diese ist weiter bevorzugt auf eine Trägerlage aufgebracht. Als Trägerlage kommt beispielsweise ein Kunststoff-Stützgitter oder eine Spinnvlies-Lage in Betracht. Die weiteren Eigenschaften können denen der beschriebenen Feinfilterlagen mit Glasfasern entsprechen.

In einer Ausführungsform sind die Vorfilterlage und die Feinfilterlage in einem Filterbalg mit insbesondere unmittelbar aufeinanderliegenden Lagen eines Vorfiltermediums und eines Feinfiltermediums integriert.

In einer Ausführungsform ist eine Deckschicht nur einseitig auf die Glasfaserlage kaschiert, auf die andere Seite wird direkt das Vorfiltermedium auflaminiert. Diese Lagenkombination kann entweder flach in das Innenraumfilterelement integriert oder als gesamte Lagenkombination zickzackförmig gefaltet sein und einen Faltenbalg bilden. Auf diese Weise kann ein Innenraumluftfilterelement mit mehreren Filterstufen mit geringem Montageaufwand und auf kleinem Bauraum bereitgestellt werden.

Deckschichten und/oder Vorfilterlage können auf unterschiedliche Weise auf die Glasfaserlage aufgebracht sein. Hierbei kommen beispielsweise gesprühte Klebstoffe, beispielsweise in wässriger Suspension zum Beispiel auf PU-Basis zum Einsatz. Alternativ können aufgesprühte, in Pulverauftragsverfahren oder aufgetragene Schmelzklebstoffe, beispielsweise in Form von Klebevliesen oder-gittern zwischen den Lagen zum Einsatz kommen, welche beim Kalandrieren in einem Fixierschritt aufschmelzen und anschließend aushärten und damit eine dauerhafte Verbindung herstellen. Damit kann insbesondere eine sichere Verbindung zwischen Glasfaserlage und Deckschichten hergestellt werden, die eine Faltung des Filtermediums erlaubt.

Mit einem erfindungsgemäßen Filtermedium für eine Feinfilterlage kann insbesondere ein Innenraumfilterelement mit einer Feinfilterlage bereitgestellt werden, die insbesondere gut zu einem Faltenbalg verarbeitbar ist. Insbesondere kann ein Innenraumfilterelement bereitgestellt werden, das eine Aerosol-Durchdringung von ≤ 0,05% gemessen nach EN 15695-2:2009 erreicht.

In dem erfindungsgemäßen Filterelement können Vorfilterlage und/oder die Adsorptionsfilterlage und/oder die Feinfilterlage jeweils ein separates Teilfilterelement bilden oder vollständig oder teilweise in Schichten aufeinanderfolgend miteinander verbunden sein.

In einer bevorzugten Ausführungsform umfasst das Innenraumfilterelement aufeinanderfolgend drei Teilfilterelemente Vorfilterlage, Adsorptionsfilterlage und Feinfilterlage. Diese weisen bevorzugt jeweils ein an den Schmalseiten umlaufendes Seitenband auf, welches mit der jeweiligen Teilfilterlage dichtend verbunden ist. Das Seitenband kann ein textiles oder aus Vlies gebildetes Seitenband sein.

Als Schmalseiten werden dabei bevorzugt die Seiten der Filterlage bezeichnet, die nicht durchströmt werden. Dabei umranden die Schmalseiten die Anström- und Abströmseiten bzw. -flächen. Bei einem Medienaufbau, der durch zickzackförmiges Falten eines Mediums gebildet ist, umfasst der Begriff Schmalseiten damit sowohl die durch den zickzackförmigen Verlauf zweier Ränder des Mediums gebildeten Flächen (Stirnseiten) als auch die parallel zu den Faltkanten verlaufenden Endflächen.

In einer Ausführungsform liegen die Vorfilterlage und/oder die Adsorptionsfilterlage und/ oder die Feinfilterlage direkt aufeinander und sind als Einheit zickzackförmig gefaltet.

In einer Ausführungsform liegen die Teilfilterelemente zur Bildung des Innenraumfilterelements insbesondere unmittelbar aufeinander und sind mittels eines Rahmens miteinander dichtend verbunden, insbesondere mittels eines an der gemeinsamen Schmalseite umlaufenden Seitenbandes, insbesondere aus Vlies oder Textil, welches mit den Teilfilterelementen verschweißt oder verklebt sein kann.

Alternativ kann ein insbesondere spritzgegossener Kunststoffrahmen vorgesehen sein. Dieser kann entweder vorgefertigt sein und die Teilfilterelemente aufnehmen, die im Rahmen verklebt oder verschweißt werden. Alternativ kann der Rahmen als umspritzter Rahmen ausgebildet sein, der dadurch gebildet wird, dass die Teilfilterelemente in eine Form eingelegt und anschließend mit einem Spritzgussrahmen umspritzt werden, wobei das Material sich beim Aushärten unlösbar mit den Teilfilterelementen verbindet.

Weiter alternativ kann der Rahmen durch eine Vergussmasse aus Polyurethan (PUR) oder einem anderen gießfähigen Polymer gebildet sein, insbesondere aus einem aufgeschäumten Polyurethan, d.h. Polyurethanschaum.

Erfindungsgemäß ist die Dichtung durch ein umlaufendes Dichtprofil aus einem Polymer, insbesondere aus einem angeschäumten, insbesondere geschlossenporigen Schaum zum Beispiel aus Polyurethanschaum gebildet. Ist auch der Rahmen aus einem derartigen Material gebildet, kann die Dichtung mit dem Rahmen einstückig ausgebildet sein. Bevorzugt weist die Dichtung eine Härte im Bereich zwischen 5 und 45 Shore A, besonders bevorzugt von 13 +/- 4 Shore A auf.

In einer bevorzugten Ausführungsform ist die Dichtung zwischen zwei Gehäuseteilen eines Filtergehäuses axial oder radial dichtend verpressbar oder einspannbar.

Die Erfindung betrifft ferner ein Innenraumluftfiltersystem für die Fahrerkabine von Land- und Arbeitsmaschinen, insbesondere mit Spritz- oder Sprühvorrichtungen für Pflanzenschutz- oder Düngemittel, umfassend ein erfindungsgemäßes Innenraumluftfilterelement und ein Gehäuse mit einem Lufteinlass und einem Luftauslass, in welchem das Innenraumluftfilterelement dichtend die Einlassseite von der Auslassseite trennt.

Die Erfindung betrifft ferner eine Fahrerkabine eines Fahrzeugs oder einer Arbeitsmaschine umfassend ein erfindungsgemäßes Innenraumluftfiltersystem sowie die Verwendung eines erfindungsgemäßen Innenraumluftfilterelements oder Innenraumluftfiltersystems in einer Fahrerkabine eines Fahrzeugs oder einer Arbeitsmaschine.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen des Innenraumluftfilterelements oder des Innenraumluftfiltersystems. Dabei wird der Fachmann auch Einzelaspekte als Verbesserungen oder Ergänzungen zu der jeweiligen Grundform der Erfindung zufügen oder abändern.

Weitere Ausgestaltungen der Erfindung sind Gegenstand der Unteransprüche sowie der im Folgenden beschriebenen Ausführungsbeispiele der Erfindung. Im Weiteren wird die Erfindung anhand von Ausführungsbeispielen unter Bezugnahme auf die beigelegten Figuren näher erläutert.

### Kurze Beschreibung der Zeichnungen

Es zeigen dabei:
- Fig. 1:: eine Lage einer fixierten Aktivkohleschüttung auf einer Trägerschicht;
- Fig. 2:: eine erste Ausführungsform eines aus zwei Lagen gemäß Fig. 1 gebildeten Halbzeugs einer Adsorptionsfilterlage;
- Fig. 3:: eine zweite Ausführungsform eines aus zwei Lagen gemäß Fig. 1 gebildeten Halbzeugs;
- Fig. 4:: ein aus einer Lage gemäß Fig. 1 und einer Deckschicht gebildetes Halbzeug einer Adsorptionsfilterlage;
- Fig. 5:: eine Adsorptionsfilterlage aus zwei Lagen eines Halbzeugs nach Fig. 4;
- Fig. 6:: ein Innenraumluftfiltersystem mit einer Ausführungsform eines Innenraumluftfilterelements;
- Fig. 7:: beispielhaft die Adsorptions- und Desorptionseigenschaften für Wasser eines Aktivkohlematerials;
- Fig. 8:: ein Innenraumluftfiltersystem mit einer für das Verständnis der Erfindung hilfreichen Ausführungsform eines Innenraumluftfilterelements;
- Fig. 9:: ein Innenraumluftfiltersystem mit einer weiteren Ausführungsform eines Innenraum luftfilterelements.

### Ausführungsform(en) der Erfindung

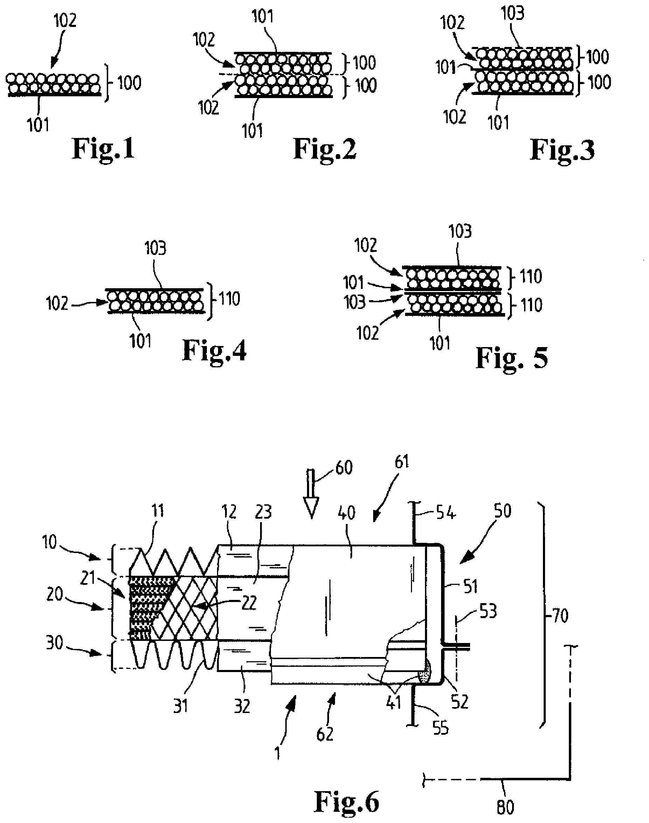

Den Figuren 1 - 5 ist ein möglicher Aufbau einer Adsorptionsfilterlage zu entnehmen. Fig. 1 zeigt eine Lage 100 einer fixierten Schüttung von Aktivkohlepartikeln, umfassend eine Trägerschicht 101 und eine Schüttlage 102 mit Aktivkohlepartikeln.

Zwei dieser Lagen können auf verschiedene Weise zu Halbzeugen verbunden werden, welche einlagig oder mehrlagig eine Adsorptionsfilterlage bilden können. In der Ausführungsform gemäß Fig. 2 werden zwei derartige Lagen 100 derart aufeinander angeordnet, dass jeweils die Schüttlagen 102 aufeinander liegen, wobei ein Halbzeug gebildet wird, welches beidseitig von den Trägerlagen 101 begrenzt wird. Mehrere dieser Halbzeuge können zur Bildung einer Gesamtadsorptionfilterlage aufeinander gestapelt werden.

In der Ausführungsform nach Fig. 3 sind zwei derartige Lagen 100 in gleicher Orientierung aufeinander angeordnet, es kann jedoch auch eine größere Anzahl von derartigen Lagen 100 auf diese Weise aufeinanderliegend angeordnet sein. Um eine abgeschlossene Adsorptinosfilterlage zu bilden, kann eine Deckschicht 103 auf die Schüttlage 102 aufgebracht werden.

Fig. 4 zeigt eine Ausführungsform eines Halbzeugs 110 mit einer Lage 102 einer fixierten Schüttung aus Aktivkohlepartikeln, die auf eine Trägerschicht 101 aufgebracht und von einer Deckschicht 103 bedeckt sind. Das Halbzeug 110 kann wie in Fig. 5 gezeigt in einer zwei- oder mehrlagigen Anordnung von aufeinanderliegenden Halbzeugen 110 eine Gesamtadsorptionsfilterlage bilden.
Die Schüttlagen 102 sind in den Ausführungsformen mittels feiner Netze von Klebstofffäden mit den jeweiligen Träger - und Deckschichten verbunden, es können jedoch auch andere Verbindungsarten gewählt werden.

Fig. 6 zeigt eine Ausführungsform eines Innenraumluftfiltersystems 70 in einer Fahrerkabine 80 für Fahrzeuge, Landmaschinen, Baumaschinen und Arbeitsmaschinen. Das Innenraumluftfiltersystem 70 umfasst ein Gehäuse 50 mit einer ersten Gehäusehälfte 51 und einer zweiten Gehäusehälfte 52, welche durch Verschlussmittel 53 miteinander verbunden sind. Im Gehäuse 50 ist ein Innenraumluftfilterelement 1 (Filterelement) derart angeordnet, dass die Rohseite 61 dichtend von der Reinseite 62 getrennt ist. Das Filterelement weist eine umlaufende Dichtung 41 auf, die durch Verspannen des Filterelements 1 zwischen den Gehäusehälften axial, d.h. in Strömungsrichtung 60, gegen eine Dichtfläche der zweiten Gehäusehälfte dichtend verpresst wird. Die Dichtung 41 ist als in einer Form gegossenes Profil aus geschlossenem Polyurethanschaum mit einer Shorehärte von 13 Shore A ausgebildet. Das Filterelement 1 umfasst eine anströmseitige Vorfilterlage 10, die die Rohseite begrenzt, eine abströmseitige Feinfilterlage 30, die die Reinseite begrenzt und eine zwischen diesen angeordnete Adsorptionsfilterlage 20. Diese kann entweder wie links mit Bezugszeichen 21 gezeigt aus einem mehrlagigen Aufbau aus aufeinanderliegend angeordneten Lagen von fixierten Schüttungen von Aktivkohlepartikeln auf Trägerlagen oder wie rechts daneben angedeutet, nicht erfindungsgemäß, aus einem offenporigen Schaum mit eingerieselter Aktivkohle gebildet sein. Gemäß der unter Bezugszeichen 21 gezeigten Variante sind in dieser Ausführungsform sieben Doppellagen von fixierten Schüttungen wie in Fig. 2 gezeigt aufeinanderliegend angeordnet, die jeweils eine Trägerlage aus Spinnvlies von schmelzgeblasenen PET-Fasern (Polyethylenterephthalat) mit einem Flächengewicht von 85 g/m² und einer Luftdurchlässigkeit 5500 l/m²s bei 200 Pa umfassen können. Darauf ist mittels eines in dünnen Fasern aufgetragenen Klebstoffs auf Polyurethanbasis eine Schüttung aus Aktivkohlekügelchen von ca. 800 g/m² aufgebracht. Diese weist bei einer relativen Luftfeuchte von 50% eine Wasseraufnahme von ca. 9 Massenprozent und eine BET-Oberfläche von 900 m²/g auf. Die Aktivkohlepartikel weisen Durchmesser im Bereich von 0,2 bis 0,7 mm auf. Die Adsorptionsfilterlage weist in Durchströmungsrichtung eine Erstreckung von 30 mm auf.

Die Vorfilterlage 10 ist aus einem zickzackförmig gefalteten Zellulose-Filtermedium 11 mit Epoxidimprägnierung gebildet, welches ein Flächengewicht von 90 g/m², eine maximale Porengröße von 40 µm, eine Luftdurchlässigkeit von ca. 200 l/m²s gemessen bei einer Druckdifferenz von 200 Pa aufweist.

Die Feinfilterlage 30 ist aus einem zickzackförmig gefalteten HEPA-Glasfasermedium 31 mit einer Schicht eines Glasfaserpapiers mit beidseitig aufkaschierten Deckschichten aus einem Spinnvlies aus Polyester gebildet. Die Glasfasern weisen verschiedene Faserdurchmesser im Bereich von 800 nm bis 5 µm auf. Die Flächenmasse des Glasfaserpapiers beträgt bevorzugt 80 g/m². Die Deckschicht weist Flächenmassen von ca. 30 g/m² und Schichtdicken von ca. 0,2 mm auf und ist durch einen Kalanderprozess mit dem Glasfaserpapier verbunden.

Vorfilterlage 10, Feinfilterlage 30 und Adsorptionsfilterlage 20 weisen jeweils ein dichtend umlaufendes Seitenband 12, 23, 32 aus Polyestervlies auf und sind aufeinanderliegend mittels eines weiteren Seitenbands 40 zu einem Filterelement 1 verbunden, wobei das Seitenband 40 die Teilfilterlagen 10, 20, 30 dichtend miteinander verbindet. Am Seitenband 40 ist wiederum die Dichtung 41 angeschäumt, mit welcher die Rohseite von der Reinseite im Gehäuse 50 trennbar ist.

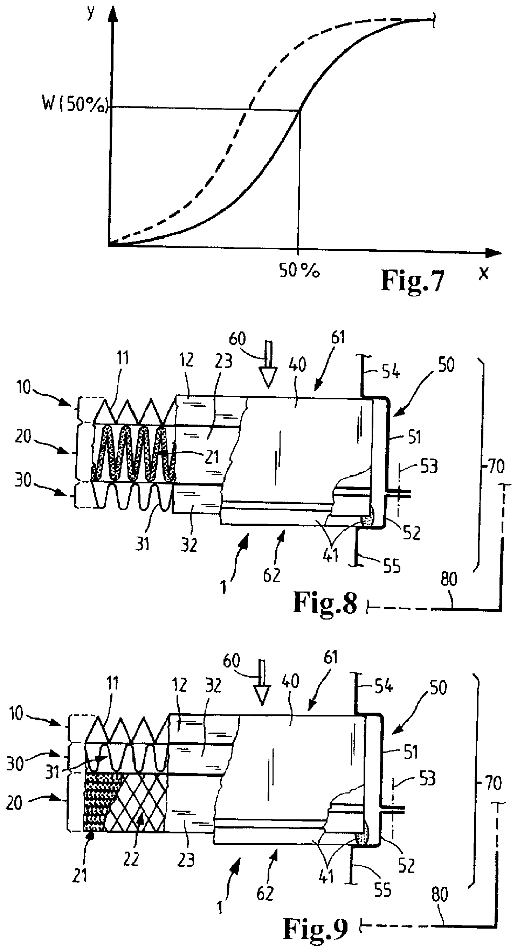

Fig. 7 zeigt beispielhaft anhand von Isothermen die Adsorptions- und Desorptionseigenschaften für Wasser eines Aktivkohlematerials. Aufgetragen ist auf der x-Achse die relative Luftfeuchte in Prozent und auf der y-Achse die auf die Masse der Aktivkohle bezogene Wasseraufnahme W in Massenprozent. Die Messung erfolgt üblicherweise bei Normaltemperatur und Normaldruck. Die maximale Wasseraufnahme liegt hierbei bei vielen Aktivkohletypen im Bereich von 20 bis 50 Massenprozent. Aktivkohle zeigt bei Adsorption und Desorption üblicherweise ein Hystereseverhalten, wie in Fig. 6 dargestellt. Die durchgezogene Linie stellt den Verlauf der Wasseraufnahme bei Adsorption dar und wird Adsorptionsast genannt. Die gestrichelt dargestellte Linie stellt den Verlauf der Wasseraufnahme bei Desorption dar und wird Desorptionsast genannt. Erfindungsgemäß beträgt bei einer relativen Luftfeuchte von 50% die Wasseraufnahme W(50%) kleiner 10 Massen-%, bevorzugt kleiner 5 Massen-%, gemessen auf dem hier durchgezogen dargestellten Adsorptionsast der Isotherme.

Fig. 8 und 9 zeigen jeweils Abwandlungen der in Fig. 6 gezeigten Ausführungsform, wobei die in Fig. 8 gezeigte Abwandlung zum Verständnis der Erfindung hilfreich ist und sich dadurch auszeichnet, dass als Adsorptionsfilterlage 20 ein ein- oder mehrlagiger Schichtaufbau aus fixierten Schüttungen von Aktivkohle gebildet ist, welcher zickzackförmig gefaltet ist, insbesondere derart, dass sich gegenüberliegende Faltenschenkel aneinander anliegen, so dass zwischen den Falten kein Zwischenraum gebildet ist.

Die in Fig. 9 gezeigte Variante entspricht der in Fig. 6 gezeigten Ausführungsform, wobei dort die Feinfilterlage 30 zwischen der Vorfilterlage 10 und der Adsorptionsfilterlage 20 angeordnet ist. Dies hat den Vorteil, dass die Adsorptionsfilterlage 20 mit einem noch geringeren Anteil an Partikeln belastet wird, wodurch ihre Wirkung besonders gut aufrecht erhalten werden kann. Selbstverständlich kann auch sowohl in dieser Variante als auch in der in Fig. 6 gezeigten Ausführungsform die Adsorptionsfilterlage wie in Fig. 8 gezeigt ausgeführt sein.

## Patentansprüche

1. Innenraumluftfilterelement für die Fahrerkabine von Land- und Arbeitsmaschinen mit Spritz- oder Sprühvorrichtungen für Pflanzenschutz- oder Düngemittel, umfassend
a. eine Adsorptionsfilterlage umfassend Aktivkohle, wobei die Adsorptionsfilterlage einen Schichtaufbau aus 4 bis 20 fixierten Schüttungen aufweist, die fixierten Schüttungen jeweils umfassend eine Trägerschicht, auf welcher eine Schüttlage von Aktivkohlepartikeln fixiert ist,
b. eine Feinfilterlage ausgelegt zur Abscheidung von Aerosolen,
c. eine umlaufende Dichtung zur Trennung der Rohseite von der Reinseite beim Einbau in ein Filtergehäuse, die durch ein umlaufendes Dichtprofil aus einem Polymer, insbesondere aus einem angeschäumten, geschlossenporigen Schaum zum Beispiel aus Polyurethanschaum gebildet ist.

2. Innenraumluftfilterelement nach Anspruch 1, **dadurch gekennzeichnet, dass** dieses eine anströmseitige Vorfilterlage, insbesondere zur Abscheidung von Stäuben umfasst.

3. Innenraumluftfilterelement nach einem der vorhergehenden Ansprüche, **dadurch gekennzeichnet, dass** eine hydrophobe Aktivkohle verwendet wird.

4. Innenraumluftfilterelement nach einem der vorhergehenden Ansprüche, **dadurch gekennzeichnet, dass** als Vorfilterlage ein ungefaltetes oder zickzackförmig gefaltetes Filtermedium aus Zellulose, Kunststoffschaum oder Vlies, z.B. Kunststoffvlies verwendet wird.

5. Innenraumluftfilterelement nach einem der vorhergehenden Ansprüche, **dadurch gekennzeichnet, dass** bei dem Schichtaufbau aus mehreren fixierten Schüttungen eine erste Lage einer fixierten Schüttung mit der als Aktivkohleseite bezeichneten Seite, auf der die Aktivkohle angeordnet ist, auf die Aktivkohleseite einer zweiten Lage fixierter Schüttung gelegt und mit dieser beispielsweise durch Verkleben verbunden ist, wodurch ein Halbzeug mit zwei Träger- oder Deckschichten und dazwischen angeordneter Schüttlage gebildet wird.

6. Innenraumfilterelement nach Anspruch 5, wobei mehrere Halbzeuge mehrfach übereinander angeordnet sind.

7. Innenraumfilterelement nach einem der Ansprüche 1 - 4, **dadurch gekennzeichnet, dass** mindestens zwei Lagen (100) fixierter Schüttung in gleicher Orientierung aufeinander angeordnet sind.

8. Innenraumfilterelement nach einem der Ansprüche 1 - 4, **dadurch gekennzeichnet, dass** eine zwei- oder mehrlagige Anordnung von aufeinanderliegenden Halbzeugen mit einer Lage (102) einer fixierten Schüttung aus Aktivkohlepartikeln, die auf eine Trägerschicht (101) aufgebracht und von einer Deckschicht (103) bedeckt sind, eine Gesamtadsorptionsfilterlage bilden.

9. Innenraumluftfilterelement nach einem der vorhergehenden Ansprüche, **dadurch gekennzeichnet, dass** als Feinfilterlage ein zickzackförmig gefaltetes Filtermedium aus Glasfaservlies verwendet wird, insbesondere ein Glasfaservlies mit einer oder zwei Deckschichten aus einem Spinnvlies.

10. Innenraumluftfilterelement nach einem der vorhergehenden Ansprüche, **dadurch gekennzeichnet, dass** die Vorfilterlage und/oder die Adsorptionsfilterlage und/oder die Feinfilterlage jeweils ein separates Teilfilterelement bilden.

11. Innenraumluftfilterelement nach dem vorherigen Anspruch, **dadurch gekennzeichnet, dass** die Vorfilterlage und/oder die Adsorptionsfilterlage und/oder die Feinfilterlage ein an den Schmalseiten umlaufendes Seitenband aufweisen, welches mit den Filterlagen dichtend verbunden ist.

12. Innenraumluftfilterelement nach dem vorherigen Anspruch, **dadurch gekennzeichnet, dass** die Teilfilterelemente zur Bildung des Innenraumfilterelements aufeinander liegen und mittels eines Rahmens miteinander dichtend verbunden sind, insbesondere mittels eines an der gemeinsamen Schmalseite umlaufenden Seitenbandes, insbesondere aus Vlies oder Textil, welches mit den Teilfilterelementen verschweißt oder verklebt sein kann.

13. Innenraumluftfilterelement nach einem der vorhergehenden Ansprüche, **dadurch gekennzeichnet, dass** die Vorfilterlage und/oder die Adsorptionsfilterlage und/oder die Feinfilterlage direkt aufeinanderliegen und als Einheit zickzackförmig gefaltet sind.

14. Innenraumluftfiltersystem für die Fahrerkabine von Land- und Arbeitsmaschinen, insbesondere mit Spritz- oder Sprühvorrichtungen für Pflanzenschutz- oder Düngemittel, umfassend ein Innenraumluftfilterelement nach einem der Ansprüche 1 - 13 und ein Gehäuse mit einem Lufteinlass und einem Luftauslass, in welchem das Innenraumluftfilterelement dichtend die Einlassseite von der Auslassseite trennt.

15. Verfahren zur Reinigung von mit Schadgasen und/oder Aerosolen und/oder Feststoffpartikelstaub beladener Zuluft von Land- oder Arbeitsmaschinen mit Spritz- oder Sprühvorrichtungen für Pflanzenschutz- oder Düngemittel, umfassend die Schritte
a. Zuleitung der ungereinigten Luft zu einem Innenraumluftfilterelement nach einem der Ansprüche 1 - 13;
b. Fakultativ Abscheidung von Stäuben aus Feststoffpartikeln mittels eines Vorfilterbereichs (70);
c. Abscheidung von Schadgasen mittels der Adsorptionsfilterlage (50);
d. Abscheidung von Aerosolen mittels der Feinfilterlage (80).

## Claims

1. Cabin air filter element for the driver's cab of agricultural and work machines with spraying and atomizing devices for pesticides or fertilizers, comprising
a. an adsorption filter layer comprising activated carbon, wherein the adsorption filter layer features a layer structure of 4 to 20 fixed beds, the fixed beds each comprising a carrier layer on which a bed layer of activated carbon particles is fixed,
b. a fine filter layer designed for separating aerosols,
c. a circumferential seal for separating the raw side from the clean side during installation into a filter housing, the seal being made of a circumferential sealing profile of a polymer, in particular of a foamed, closed-pore foam for example of polyurethane foam.

2. Cabin air filter element according to claim 1, **characterized in that** it comprises an inflow-sided prefilter layer, in particular for separating dusts.

3. Cabin air filter element according to one of the preceding claims, **characterized in that** a hydrophobic activated carbon is used.

4. Cabin air filter element according to one of the preceding claims, **characterized in that** as prefilter layer an unfolded or zigzag-folded filter medium made of cellulose, synthetic foam or fleece, e.g. synthetic fleece is used.

5. Cabin air filter element according to one of the preceding claims, **characterized in that,** in the layer structure of a plurality of fixed beds, a first layer of a fixed bed with the side designated as the activated carbon side, on which the activated carbon is disposed, is placed on the activated carbon side of a second layer of fixed bed and connected thereto, for example by bonding, whereby a semi-finished product with two carrier or cover layers and a bed layer arranged therebetween is formed.

6. Cabin filter element according to claim 5, wherein several semi-finished products are arranged several times on top of each other.

7. Cabin filter element according to one of the claims 1 to 4, **characterized in that** at least two layers (100) of a fixed bed are placed one above the other in the same orientation.

8. Cabin filter element according to one of the claims 1 to 4, **characterized in that** a two-layer or multi-layer arrangement of semi-finished products placed one above of the other with a layer (102) of a fixed bed of activated carbon particles, which are applied to a carrier layer (101) and covered by a cover layer (103), form a complete adsorption filter layer.

9. Cabin air filter element according to one of the preceding claims, **characterized in that** as fine filter layer a zigzag-folded filter medium made of glass fiber fleece is used, in particular a glass fiber fleece with one or two cover layers made of a spunbonded fleece.

10. Cabin air filter element according to one of the preceding claims, **characterized in that** the prefilter layer and/or the adsorption filter layer and/or the fine filter layer each form a separate partial filter element.

11. Cabin air filter element according to the preceding claim, **characterized in that** the prefilter layer and/or the adsorption filter layer and/or the fine filter layer feature a lateral strip surrounding the narrow sides and which is sealingly connected to the filter layers.

12. Cabin air filter element according to the preceding claim, **characterized in that** the partial filter elements for forming the cabin filter element are placed one above the other and sealingly connected by means of a frame, in particular by means of a lateral strip surrounding the common narrow side, in particular made of non-woven fabric or textile, which can be welded or glued with the partial filter elements.

13. Cabin air filter element according to one of the preceding claims, **characterized in that** the prefilter layer and/or the adsorption filter layer and/or the fine filter layer are directly placed one above the other and zigzag-folded as unit.

14. Cabin air filter system for the driver's cab of agricultural and work machines, in particular with spraying and atomizing devices for pesticides or fertilizers, comprising a cabin air filter element according to one of the claims 1 to 13 and a housing with an air inlet and an air outlet, in which the cabin air filter element sealingly separates the inlet side from the outlet side.

15. Method for cleaning inlet air charged with harmful gases and/or aerosols and/or solid particle dust of agricultural or work machines with spraying or atomizing devices for pesticides or fertilizers, comprising the steps
a. Supply of the unpurified air to a cabin air filter element according to one of the claims 1 to 13;
b. Optional separation of dusts from solid particles by means of a prefilter area (70);
c. Separation of harmful gases by means of the adsorption filter layer (50);
d. Separation of aerosols by means of the fine filter layer (80).

## Revendications

1. Élément de filtration d'air d'espace intérieur pour la cabine de conduite de machines agricoles et de travail avec dispositifs de pulvérisation ou d'atomisation pour des produits phytosanitaires ou des engrais, comprenant
a. une couche de filtre d'adsorption comprenant du charbon actif, la couche de filtre d'adsorption présentant une structure de couche de 4 à 20 lits fixes, les lits fixes comprenant chacun une couche de support sur laquelle une couche de lit de particules de charbon actif est fixée,
b. une couche filtrante fine conçue pour la séparation des aérosols,
c. un joint circonférentiel pour séparer le côté brut du côté pur pendant l'installation dans un boîtier de filtre, ledit joint étant formé par un profil d'étanchéité circonférentiel d'un polymère, notamment d'une mousse à pores fermés moussée, par exemple en mousse polyuréthane.

2. Élément de filtration d'air d'espace intérieur selon la revendication 1, **caractérisé en ce qu'**il comprend une couche de préfiltre en amont, notamment pour séparer la poussière.

3. Élément de filtration d'air d'espace intérieur selon l'une des revendications précédentes, **caractérisé en ce qu'**un charbon actif hydrophobe est utilisé.

4. Élément de filtration d'air d'espace intérieur selon l'une des revendications précédentes, **caractérisé en ce qu'**un milieu filtrant déplié ou plié en zigzag en cellulose, en mousse de matière synthétique ou en non-tissé, par exemple en non-tissé synthétique, est utilisé comme couche de préfiltre.

5. Élément de filtration d'air d'espace intérieur selon l'une des revendications précédentes, **caractérisé en ce que,** dans la structure stratifiée d'une pluralité de lits fixes, une première couche d'un lit fixe avec le côté désigné comme côté charbon actif, sur lequel est disposé le charbon actif, est placée sur le côté charbon actif d'une seconde couche de lit fixe et y est reliée, par exemple par liaison, un demi-produit avec deux couches de support ou de recouvrement et une couche de lit disposée entre celles-ci étant alors formé.

6. Élément de filtration d'espace intérieur selon la revendication 5, plusieurs demi-produits étant disposés plusieurs fois les uns au-dessus des autres.

7. Élément de filtration d'espace intérieur selon l'une des revendications 1 à 4, **caractérisé en ce qu'**au moins deux couches (100) de lits fixes sont disposées l'une sur l'autre dans la même orientation.

8. Élément de filtration d'espace intérieur selon l'une des revendications 1 à 4, **caractérisé en ce qu'**un agencement à deux ou plusieurs couches de demi-produits superposés avec une couche (102) d'un lit fixe de particules de charbon actif, qui sont appliquées sur une couche de support (101) et couvertes par une couche de recouvrement (103), forment une couche filtrante à adsorption complète.

9. Élément de filtration d'air d'espace intérieur selon l'une des revendications précédentes, **caractérisé en ce qu'**on utilise comme couche filtrante fine un milieu filtrant plié en zigzag en non-tissé en fibre de verre, notamment un non-tissé en fibre de verre pourvu d'une ou de deux couches de recouvrement en filé-lié.

10. Élément de filtration d'air d'espace intérieur selon l'une des revendications précédentes, **caractérisé en ce que** la couche de préfiltre et/ou la couche de filtre d'adsorption et/ou la couche filtrante fine forment chacune un élément filtrant partiel séparé.

11. Élément de filtration d'air d'espace intérieur selon la revendication précédente, **caractérisé en ce que** la couche de préfiltre et/ou la couche de filtre d'adsorption et/ou la couche filtrante fine présentent une bande latérale entourant les côtés étroits et qui est reliée de manière étanche aux couches filtrantes fines.

12. Élément de filtration d'air d'espace intérieur selon la revendication précédente, **caractérisé en ce que** les éléments filtrants partiels sont superposés pour former l'élément de filtration d'espace intérieur et reliés de manière étanche les uns aux autres au moyen d'un cadre, notamment au moyen d'une bande latérale, notamment en non-tissé ou textile, entourant le côté étroit commun et qui peut être soudé ou collé aux éléments filtrants partiels.

13. Élément de filtration d'air d'espace intérieur selon l'une des revendications précédentes, **caractérisé en ce que** la couche de préfiltre et/ou la couche de filtre d'adsorption et/ou la couche filtrante fine reposent directement l'une sur l'autre et sont pliées en zigzag formant une unité.

14. Système de filtration d'air d'espace intérieur pour la cabine de conduite de machines agricoles et de travail, notamment avec dispositifs de pulvérisation ou d'atomisation pour des produits phytosanitaires ou des engrais, comprenant un élément de filtration d'air d'espace intérieur selon l'une des revendications 1 à 13 et un boîtier avec une entrée et une sortie d'air, dans lequel l'élément de filtration d'air d'espace intérieur sépare de manière étanche le côté entrée du côté sortie.

15. Procédé de purification de l'air d'admission chargé de gaz toxiques et/ou d'aérosols et/ou de poussières de particules solides provenant de machines agricoles ou de travail avec dispositifs de pulvérisation ou d'atomisation pour des produits phytosanitaires ou des engrais, comprenant les étapes
a. Alimentation en air non purifié d'un élément de filtration d'air d'espace intérieur selon l'une des revendications 1 à 13;
b. Séparation optionnelle des poussières des particules solides au moyen d'une zone de préfiltration (70);
c. Séparation des gaz toxiques au moyen de la couche de filtre d'adsorption (50);
d. Séparation des aérosols au moyen de la couche filtrante fine (80).
